# EUROPÄISCHE PATENTANMELDUNG

(11) **EP 4 279 847 A1**
(43) Veröffentlichungstag der Anmeldung: **22.11.2023**
(21) Anmeldenummer: 23168465.5
(22) Anmeldetag: 18.04.2023
(51) Int. Cl.: F25D 29/00

(54) **BEREITSTELLEN EINES BILDS EINES OBJEKTS AUS EINEM KÜHLGERÄT**

(30) Priorität: 19.05.2022 DE 102022204985
(71) Anmelder: BSH Hausgeräte GmbH, 81739 München (DE)
(72) Erfinder: Hage, Clemens, 81829 München (DE); Rychly, Leonard, 81541 München (DE)

(57) **Zusammenfassung**

Ein Verfahren (200) zum Bereitstellen eines Bilds eines Objekts (135) in einem Kühlgerät (100) umfasst Schritte des Erfassens eines ersten Bilds (305) des Objekts (135) mittels einer Kamera (130) aus einer vorbestimmten Perspektive; des Bestimmens eines zweiten Bilds (310), das aus einer vergleichbaren Perspektive zu einem früheren Zeitpunkt von dem Objekt (135) erfasst wurde; und des Kombinierens (230) des ersten und des zweiten Bilds (305, 310), um an einem resultierenden, kombinierten Bild eine Bildschärfe zu verbessern und/oder ein Bildrauschen zu verringern.

## Beschreibung

Die vorliegende Erfindung betrifft das Bereitstellen eines Bilds eines Objekts in einem Kühlgerät. Insbesondere betrifft die Erfindung die Verbesserung einer Qualität des Bilds.

Ein Kühlgerät umfasst eine Kamera, die dazu eingerichtet ist, ein im Innenraum des Kühlgeräts aufgenommenes Objekt abzubilden. Die optischen Fähigkeiten einer üblicherweise am Kühlgerät angebrachten Kamera sind jedoch begrenzt, so dass auch die Qualität eines bereitgestellten Bildes begrenzt ist. Häufig wird eine Weiterverarbeitung des Bilds die Erkennung des Objekts durch eine niedrige Bildqualität behindert. Insbesondere kann ein bereitgestelltes Bild unscharf oder verrauscht sein.

Es ist bekannt, dass mehrere Aufnahmen desselben Objekts aus vergleichbaren Perspektiven dazu genutzt werden können, ein insgesamt schärferes oder rauschärmeres Bild bereitzustellen. Dies ist jedoch nur möglich, falls eine Perspektive der Kamera gegenüber dem Objekt zwischen den einzelnen Aufnahmen nicht verändert wird. Dies kann sichergestellt werden, indem ein Abstand zwischen der Kamera und dem Objekt ausreichend groß gewählt ist. Eine solche Konstellation ist in einem üblichen Kühlgerät jedoch nicht möglich.

Eine Aufnahme kann auch mittels Methoden der künstlichen Intelligenz verbessert werden. Beispielsweise können Generative Adversarial Networks (GAN) oder Variational Auto-Encoder dazu verwendet werden, eine Auflösung der Aufnahme zu erhöhen, oder ein Bildrauschen zu verringern. Ein Informationsgehalt eines solchermaßen bereitgestellten Bildes kann jedoch den der ursprünglichen Aufnahme nicht übersteigen.

EP 2 784 419 A1 schlägt ein Kühlgerät mit einer linken und einer rechten Tür vor, wobei an jeder Tür eine Kamera angebracht ist. Eine Ansicht des Innenraums des Kühlgeräts kann bestimmt werden, indem Aufnahmen der beiden Kameras miteinander kombiniert werden. Auf Grund der beiden unterschiedlichen Perspektiven der beiden Kameras kann eine Panorama-Ansicht des Innenraums erstellt werden.

Eine der vorliegenden Erfindung zu Grunde liegende Aufgabe besteht in der Angabe einer verbesserten Technik zur Bereitstellung eines Bildes eines Objekts in einem Kühlgerät. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Verfahren zum Bereitstellen eines Bilds eines Objekts in einem Kühlgerät Schritte des Erfassens eines ersten Bilds des Objekts mittels einer Kamera aus einer vorbestimmten Perspektive; des Bestimmens eines zweiten Bilds, das aus einer vergleichbaren Perspektive zu einem früheren Zeitpunkt von dem Objekt erfasst wurde; und des Kombinierens des ersten und des zweiten Bilds, um eine Bildschärfe zu verbessern und/oder ein Bildrauschen zu verringern. Ein Ergebnis der Kombination kann als kombiniertes drittes Bild bereitgestellt werden.

Das erste und das zweite Bild können mittels derselben Kamera erfasst werden. Bevorzugt nimmt die Kamera bei der Aufnahme der Bilder vergleichbare, aber nicht notwendiger Weise identische Positionen ein. Insbesondere kann ein Bild erfasst werden, während das Kühlgerät geöffnet ist.

Es wurde erkannt, dass beim Öffnen und Schließen des Kühlgeräts durch einen Benutzer üblicherweise nicht alle darin befindlichen Objekte bewegt oder entnommen werden, sodass zu unterschiedlichen Zeitpunkten angefertigte Aufnahmen der Kamera zumindest teilweise gleiche Inhalte abbilden können. Die Aufnahmen können daher miteinander kombiniert werden, um ein kombiniertes Bild bereitzustellen, das eine höhere Qualität als die zu Grunde liegenden einzelnen Bilder aufweist. Je größer eine Anzahl von Öffnungen des Kühlgeräts ist, während derer das Objekt nicht bewegt oder verstellt wird, desto besser kann es auf dem kombinierten Bild dargestellt sein.

Es ist weiterhin bevorzugt, dass das Kühlgerät zwei Elemente umfasst, die gegeneinander bewegt werden können, um einen Innenraum zu öffnen oder zu schließen. Dabei sind die Kamera und das Objekt an verschiedenen der Elemente angebracht bzw. angeordnet. Ein Element kann beispielsweise einen Korpus und das andere eine Tür des Kühlgeräts umfassen. Das Kühlgerät kann insbesondere einen Kühlschrank, eine Gefrierschrank, eine Kühltruhe, eine Gefriertruhe oder eine Kühl-Gefrier-Kombination umfassen.

In der beschriebenen Konstellation kann ein Abstand zwischen der Kamera und dem Objekt ausreichend groß sein, um einen guten Überblick über Objekte im Kühlgerät zu bekommen, ohne dass die Kamera eine sehr kurze Brennweite benötigt. Eine Verzerrung des erfassten Bildes kann daher relativ gering sein. Der Abstand zwischen der Kamera und dem Objekt in dieser Konstellation kann auch ausreichend groß sein, um zu verschiedenen Zeitpunkten erfasste Bilder miteinander verarbeiten zu können. Ein Bild kann beispielsweise immer dann erfasst werden, wenn die Elemente in einer vorbestimmten Stellung zueinander stehen. Sind die beiden Elemente mittels eines Scharniers miteinander verbunden, so kann ein Bild erfasst werden, wenn die Elemente bezüglich des Scharniers einen vorbestimmten Öffnungswinkel erreicht haben.

In einer Ausführungsform wird das erste Bild erfasst, während die Kamera gegenüber dem Objekt bewegt wird oder umgekehrt das Objekt gegenüber der Kamera. In obigem Beispiel kann dies der Fall sein, wenn ein Benutzer die Tür über den vorbestimmten Öffnungswinkel hinaus öffnet. Der vorbestimmte Öffnungswinkel kann bewusst so gewählt sein, dass dies den Normalfall darstellt. Beim Überschreiten des vorbestimmten Öffnungswinkels kann ein Bild erfasst werden, während sich die Kamera gegenüber dem Objekt bewegt. Dazu wird bevorzugt eine kurze Belichtungszeit verwendet, um eine Bewegungsunschärfe des abgetasteten Objektes aufgrund der Relativbewegung gering zu halten. Bei der Aufnahme kann eine hohe Empfindlichkeit beziehungsweise Verstärkung erforderlich sein, um das erfasste Bild ausreichend stark zu belichten. Ein Bildrauschen kann hierdurch zunehmen.

Es ist bevorzugt, dass die Bilder vor dem Verschmelzen aneinander ausgerichtet werden, so dass ein das Objekt zeigender erster Ausschnitt des Bildabschnitts des ersten Bilds und ein das Objekt zeigender zweiter Bildabschnitt des zweiten Bilds an derselben Stelle liegen bzw. zueinander passen. Das Ausrichten kann ein Drehen, ein Verschieben, ein Skalieren oder ein Scheren umfassen. Die Bilder können jeweils eine regelmäßige Anordnung von Bildelementen (Pixeln) umfassen, wobei die Bilder bevorzugt derart ausgerichtet werden, dass zueinander korrespondierende Elemente der Bilder an derselben Stelle liegen. Die Bereitstellung eines kombinierten Bilds kann so deutlich vereinfacht sein.

Es ist weiterhin bevorzugt, dass die Bilder in vorbestimmten Schritten gegeneinander ausgerichtet werden, die kleiner als ein kleinstes Bildelement eines der Bilder sind. Ein solches Bildelement kann ein Pixel umfassen. In diesem Zusammenhang kann von einer Sub-Pixel-Ausrichtung gesprochen werden. Bei der Kombination der Bilder können jeweils mehrere Bildelemente des ersten und des zweiten Bilds berücksichtig werden, um ein Bildelement des kombinierten Bilds zu bestimmen.

Es ist weiterhin bevorzugt, dass zueinander korrespondierende Bildabschnitte der Bilder bestimmt werden, wobei die korrespondierenden Bildabschnitte unterschiedliche Objekte zeigen. Diese Bildabschnitte können verworfen, nicht berücksichtigt oder entfernt werden. Dieser Schritt erfolgt bevorzugt vor der Kombination der Bilder zum kombinierten Bild.

In einer weiter bevorzugten Ausführungsform werden mehrere zweite Bilder bestimmt und ausgewertet. Dazu kann ein Datenspeicher vorgesehen sein, in dem eine Vielzahl zweiter Bilder mit unterschiedlichen Aufnahmezeitpunkten abgelegt sind. Eine Anzahl berücksichtigter zweiter Bilder kann beschränkt sein. Bevorzugt werden nur die neuesten zweiten Bilder für die Kombination ausgewählt. In einer weiteren Ausführungsform kann auch ein Alter von zweiten Bildern, die für eine Kombination berücksichtigt werden, limitiert sein.

Allgemein ist bevorzugt, dass das Kombinieren der Bilder nach Art der Erstellung eines Hochkontrastbilds (HDR-Bild) erfolgt. Im Unterschied zum dort üblichen Vorgehen können jedoch alle Bilder ähnlich oder gleich belichtet sein. Ein Tonwertumfang des bereit gestellten kombinierten Bildes kann in einem üblichen Bereich liegen und muss nicht, wie bei HDR-Bildern ansonsten üblich ist, erhöht sein.

Es ist weiterhin bevorzugt, dass das Objekt auf dem kombinierten Bild erkannt wird. Dazu kann eine Technik maschinellen Lernens eingesetzt werden. Insbesondere kann das Erkennen mittels eines künstlichen neuronalen Netzwerks KNN erfolgen.

Nach einem weiteren Aspekt der vorliegenden Erfindung erfasst eine Steuervorrichtung zur Bereitstellung eines Bilds eines Objekts in einem Kühlgerät eine Kamera zur Erfassung eines ersten Bilds des Objekts aus einer vorbestimmten Perspektive; einen Datenspeicher zur Ablage eines zweiten Bilds, das aus einer vergleichbaren Perspektive zu einem früheren Zeitpunkt von dem Objekt erfasst wurde; und eine Verarbeitungseinrichtung. Die Verarbeitungseinrichtung ist dazu eingerichtet, das erste und das zweite Bild zu kombinieren, um eine Bildschärfe zu verbessern und/oder ein Bildrauschen zu verringern.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Nicht beschränkende Ausführungsformen der Erfindung werden nun unter Bezug auf die beiliegenden Figuren genauer beschrieben, in denen:
- Figur 1: ein Kühlgerät mit einer Steuervorrichtung;
- Figur 2: ein Ablaufdiagramm eines Verfahrens; und
- Figur 3: eine beispielhafte Kombination von Bildern miteinander
darstellt.

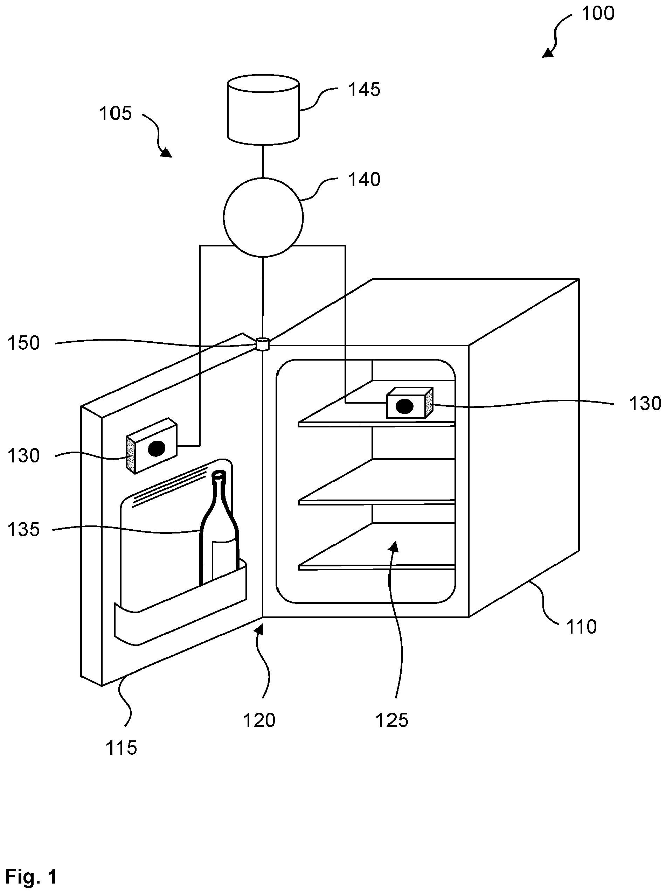

Figur 1 zeigt ein Kühlgerät 100 mit einer Steuervorrichtung 105. Das Kühlgerät 100 umfasst einen Korpus 110 und eine Tür 115, die gegeneinander um eine Scharnier 115 bewegt werden können. In einem Innenraum 125 des Kühlgeräts 110 ist wenigstens eine Kamera 130 angebracht. Eine am Korpus 110 angebrachte Kamera 130 ist dazu eingerichtet, ein Objekt 135 zu erfassen, das an der Tür 115 angebracht ist. In entsprechender Weise kann eine an der Tür 115 angebrachte Kamera 130 dazu eingerichtet sein, ein am Korpus 110 angebrachtes Objekt 135 zu erfassen.

Die Steuervorrichtung 105 umfasst eine Verarbeitungseinrichtung 140, die mit der wenigstens einen Kamera 130 verbunden ist und einen Datenspeicher 145 zu Ablage von Bildern, die mit einer Kamera 130 von einem Objekt 135 erfasst wurden.

Weiter bevorzugt ist ein Sensor 150 vorgesehen, um einen Öffnungswinkel der Tür 115 bezüglich des Korpus 110 zu bestimmen. Der Sensor 150 kann mit der Verarbeitungseinrichtung 140 verbunden sein. Erreicht der Öffnungswinkel der Tür 115 gegenüber dem Korpus 110 den vorbestimmten Öffnungswinkel, so kann eine Kamera 130 dazu angesteuert werden, ein Bild zu erfassen. In der dargestellten Ausführungsform können dabei zwei Bilder mittels der beiden Kameras 130 erfasst werden. Die Bilder können im Datenspeicher 145 abgelegt werden.

Es wird vorgeschlagen, auf der Basis eines aktuellen und wenigstens eines bereits abgespeicherten Bildes eines Objekts 135 im Innenraum 120 des Kühlgeräts 100 ein kombiniertes Bild mit verbesserter Auflösung oder Bildschärfe oder mit einem geringeren Bildrauschen bereitzustellen. Das kombinierte Bild kann dann dazu verwendet werden, das Objekt 135 zu erkennen.

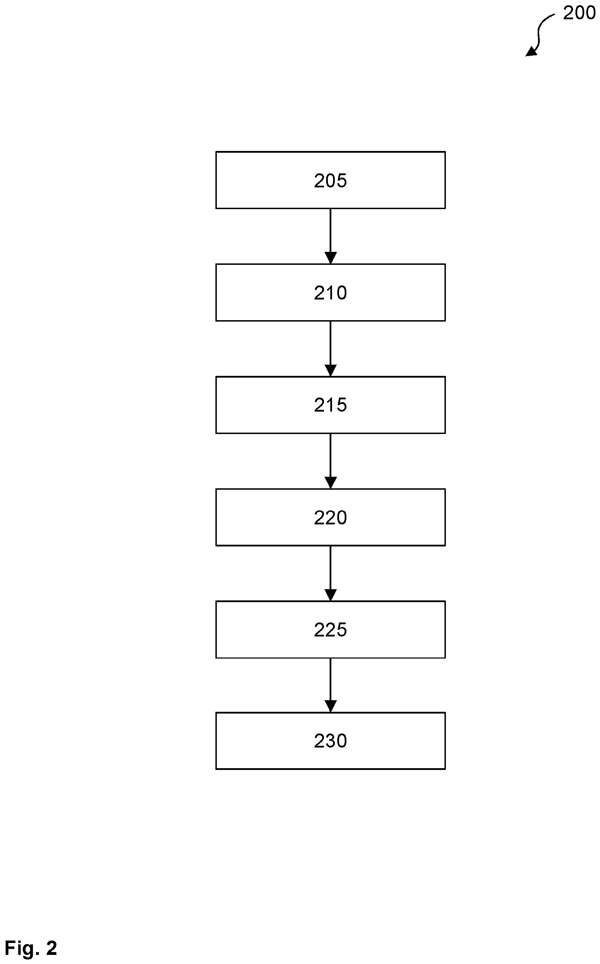

Figur 2 zeigt ein Ablaufdiagramm eines Verfahrens 200 zum Bereitstellen eines kombinierten Bilds. Das Verfahren 200 wird bevorzugt mittels der Steuervorrichtung 105 des Kühlgeräts 100 ausgeführt.

In einem Schritt 205 wird mittels einer der Kameras 130 ein erstes Bild erfasst. Dazu kann bestimmt werden, dass die Tür 115 gegenüber dem Korpus 110 einen vorbestimmten Öffnungswinkel erreicht hat. Ein Abtastbereich einer am Korpus 110 angebrachten Kamera 130 ist bevorzugt auf die Tür 115 gerichtet, wenn diese den vorbestimmten Öffnungswinkel gegenüber dem Korpus 110 erreicht hat. Objekte 135, die an oder in der Tür 115 angebracht sind, können so im Abtastbereich der Kamera 130 liegen. Ist die Kamera 130 hingegen an der Tür 115 angebracht, so ist ihr Abtastbereich bevorzugt in den Innenraum des Korpus 110 gerichtet, so dass ein dort abgelegtes Objekt 135 im Abtastbereich liegt.

In einem Schritt 210 kann ein zweites Bild bestimmt werden, das dem erfassten ersten Bild in einer vorbestimmten Weise ähnlich ist. Insbesondere kann ein zweites Bild bestimmt werden, das einen oder mehrere Bildabschnitte umfasst, das nicht mehr als vorbestimmt von korrespondierenden Bildabschnitten des ersten Bilds abweichen. Diese Bestimmung kann mittels eines künstlichen neuronalen Netzwerks durchgeführt werden. Alternativ kann auch ein Ähnlichkeitsvergleich auf der Basis klassischer Methoden erfolgen.

Obwohl im beispielhaft beschriebenen Verfahren 200 von nur einem zweiten Bild ausgegangen wird, kann die hierin beschriebene Technik auch mit einer Vielzahl zweiter Bilder durchgeführt werden. Dazu können nach vorbestimmten Suchkriterien mehrere zweite Bilder im ersten Datenspeicher 145 ausgewählt werden. Beispielsweise kann eine Anzahl zu verwendender zweiter Bilder oder ein Alter eines zu verwendenden zweiten Bildes limitiert sein. Ein zweites Bild, welches das maximale Alter überschritten hat, kann aus dem Datenspeicher 145 entfernt werden.

In einem Schritt 215 kann das erfasste erste Bild im Datenspeicher 145 abgelegt werden. Bevorzugt ist dem abgelegten Bild ein Zeitstempel zugeordnet, der auf einen Erfassungszeitpunkt des ersten Bildes hinweist.

In einem Schritt 220 können das erfasste erste Bild und das aus dem Datenspeicher 145 bereitgestellte zweite Bild aneinander ausgerichtet werden. Die Ausrichtung erfolgt bevorzugt mit einer größeren Genauigkeit, als es vollständige, kleinste Bildelemente eines der Bilder zulässt. Anders ausgedrückt können die Bilder mit Sub-Pixel-Genauigkeit aneinander ausgerichtet werden.

In einem Schritt 225 können zueinander korrespondierende, aber voneinander abweichende Bildabschnitte der Bilder entfernt werden. Zeigt beispielsweise das erste Bild ein erstes und ein zweites Objekt 135, und das zweite Bild das erste Objekt 135 an derselben Stelle, aber nicht das zweite Objekt 135, so kann aus dem ersten Bild ein Bildabschnitt entfernt werden, der das zweite Objekt 135 zeigt. Ein korrespondierender Bildabschnitt kann auch aus dem zweiten Bild entfernt werden.

In einem Schritt 230 können das erste und das zweite Bild miteinander kombiniert werden. Dazu können bekannte Methoden zur Kombination beinahe identischer Bilder eingesetzt werden. Die Kombination erfolgt bevorzugt derart, dass ein Bildrauschen des kombinierten Bilds geringer ist als ein Bildrauschen des ersten oder des zweiten Bilds. Eine Bildschärfe des kombinierten Bilds kann größer sein als eine Bildschärfe des ersten oder zweiten Bilds. In einer Ausführungsform hat das kombinierte Bild eine größeren Dynamikumfang als das erste oder das zweite Bild.

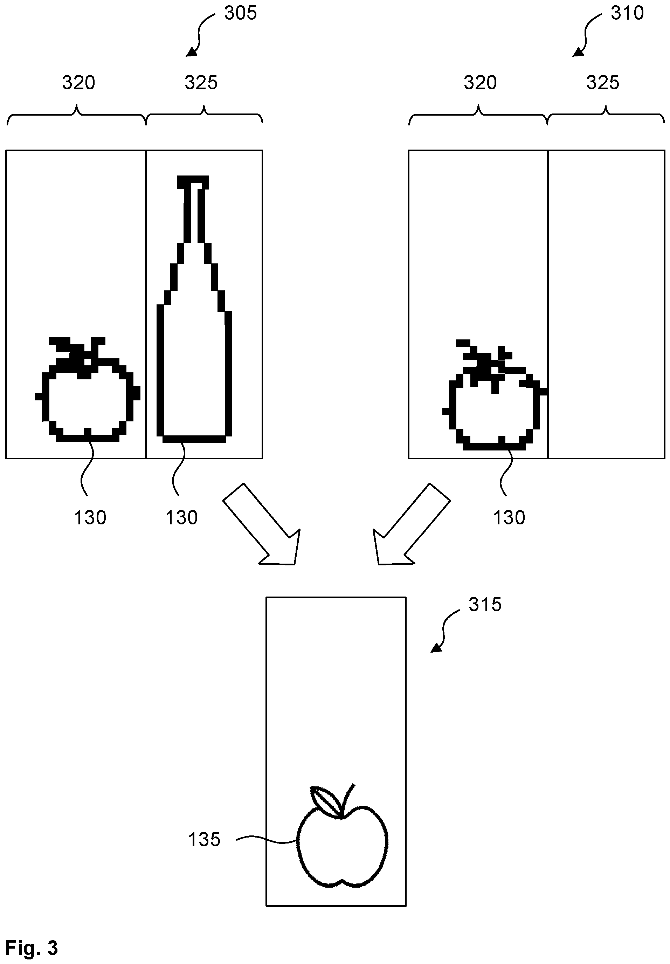

Figur 3 zeigt eine beispielhafte Kombination von Bildern miteinander. In einem oberen Bereich sind ein erstes Bild 305 und ein zweites Bild 310 dargestellt. In einem unteren Bereich ist ein drittes Bild 315 dargestellt, das aus einer Kombination der Bilder 305 und 310 hervorgeht.

Das erste Bild 305 zeigt ein erstes Objekt 135, das beispielhaft als Apfel ausgeführt ist, und ein zweites Objekt 135, das beispielhaft als Flasche ausgeführt ist. Das erste Objekt 135 liegt in einem ersten Bildabschnitt 320 und das zweite Objekt 135 in einem Bildabschnitt 325.

Das zweite Bild 310 zeigt in einem ersten Bildabschnitt 320, der zum ersten Bildabschnitt 320 des ersten Bilds 305 korrespondiert, das erste Objekt 135 in Form des Apfels, jedoch an keiner Stelle das zweite Objekt 135 in Form der Flasche.

Die Bilder 305 und 310 ähneln einander, da die Darstellungen des ersten Objekts 135 nur wenig voneinander abweichen. Zur Bestimmung der Ähnlichkeit der Bilder 305, 310 kann ein Abweichungsmaß bestimmt werden, das um so größer ist, je mehr Abweichungen zwischen den Bildern 305, 310 bestehen. Die Abweichung kann nur bezüglich des ersten Bildabschnitts 320 bestimmt werden, während der zweite Bildabschnitt 325 vernachlässigt werden kann. Die Bestimmung von einander ähnlichen Bildabschnitten 320, 325 kann mittels Methoden des Mustervergleichs, der Bereichsbildung oder des maschinellen Lernens bestimmt werden. Beispielsweise kann ein Variational Autoencoder oder ein KNN für diese Bestimmung verwendet werden.

Zur Kombination der Bilder 305 und 310 können die zweiten Bildabschnitte 325 entfernt werden. Die verbleibenden ersten Bildabschnitte 320 werden bevorzugt genau aneinander ausgerichtet und miteinander kombiniert. Das dritte Bild 315 kann dann das Objekt 135 aus den ersten Bildabschnitten 320 mit verbesserter Schärfe und/oder Rauscharmut darstellen. Das dritte Bild 315 kann extern bereitgestellt oder als Grundlage für eine Erkennung des Objekts 135 genutzt werden. Ein erkanntes Objekt 135 kann beispielsweise in einem Inventar des Inhalts des Kühlgeräts 100 verwaltet werden.

### Bezugszeichen

- 100: Kühlgerät
- 105: Steuervorrichtung
- 110: Korpus
- 115: Tür
- 120: Scharnier
- 125: Innenraum
- 130: Kamera
- 135: Objekt
- 140: Verarbeitungseinrichtung
- 145: Datenspeicher
- 150: Sensor

- 200: Verfahren
- 205: erstes Bild erfassen
- 210: zweites, früheres Bild bestimmen
- 215: erstes Bild speichern
- 220: Bilder ausrichten
- 225: abweichende Bildabschnitte entfernen
- 230: Bilder kombinieren

- 305: erstes Bild
- 310: zweites Bild
- 315: drittes Bild, kombiniertes Bild
- 320: erster Bildabschnitt
- 325: zweiter Bildabschnitt

## Patentansprüche

1. Verfahren (200) zum Bereitstellen eines Bilds eines Objekts in einem Kühlgerät (100), wobei das Verfahren (200) folgende Schritte umfasst:
- Erfassen (205) eines ersten Bilds (305) des Objekts (135) mittels einer Kamera (135) aus einer vorbestimmten Perspektive;
- Bestimmen eines zweiten Bilds (310), das aus einer vergleichbaren Perspektive zu einem früheren Zeitpunkt von dem Objekt (135) erfasst wurde; und
- Kombinieren (230) des ersten und des zweiten Bilds, um eine Bildschärfe zu verbessern und/oder ein Bildrauschen zu verringern.

2. Verfahren (200) nach Anspruch 1, wobei das Kühlgerät (100) zwei Elemente (115, 120) umfasst, die gegeneinander bewegt werden können, um einen Innenraum (125) zu öffnen oder zu schließen, wobei die Kamera (135) und das Objekt (135) an verschiedenen der Elemente (115, 120) angebracht oder angeordnet sind.

3. Verfahren (200) nach Anspruch 2, wobei das erste Bild (305) erfasst wird, während die Kamera (135) gegenüber dem Objekt (135) bewegt wird.

4. Verfahren (200) nach einem der vorangehenden Ansprüche, wobei die Bilder (305, 310) vor dem Verschmelzen aneinander ausgerichtet (220) werden, sodass ein das Objekt (135) zeigender erster Bildabschnitt (320) des ersten Bilds (305) und ein das Objekt (135) zeigender zweiter Bildabschnitt (320) des zweiten Bilds (310) an derselben Stelle liegen und/oder zueinander passen.

5. Verfahren (200) nach Anspruch 4, wobei die Bilder (305, 310) in vorbestimmten Schritten gegeneinander ausgerichtet werden, die kleiner als ein kleinstes Bildelement eines der Bilder (305, 310) sind.

6. Verfahren (200) nach einem der vorangehenden Ansprüche, wobei zueinander korrespondierende Bildabschnitte (325) der Bilder bestimmt werden, wobei die korrespondierenden Bildabschnitte (325) unterschiedliche Objekte (135) zeigen; und wobei diese Bildabschnitte (325) entfernt werden.

7. Verfahren (200) nach einem der vorangehenden Ansprüche, wobei mehrere zweite Bilder (310) bestimmt und ausgewertet werden.

8. Verfahren (200) nach einem der vorangehenden Ansprüche, wobei das Kombinieren (230) nach Art der Erstellung eines Hochkontrastbilds erfolgt.

9. Verfahren (200) nach einem der vorangehenden Ansprüche, wobei das Objekt (135) auf dem kombinierten Bild, insbesondere unter Verwendung eines künstlichen neuronalen Netzes, erkannt wird.

10. Steuervorrichtung (105) zur Bereitstellung eines Bilds eines Objekts (135) in einem Kühlgerät (100), wobei die Steuervorrichtung folgendes umfasst:
- eine Kamera (135) zur Erfassung eines ersten Bilds des Objekts (135) aus einer vorbestimmten Perspektive;
- einen Datenspeicher (145) zur Ablage eines zweiten Bilds, das aus einer vergleichbaren Perspektive zu einem früheren Zeitpunkt von dem Objekt (135) erfasst wurde; und
- eine Verarbeitungseinrichtung (140), die dazu eingerichtet ist, das erste und das zweite Bild (305, 310) zu kombinieren, um eine Bildschärfe zu verbessern und/oder ein Bildrauschen zu verringern.
